# EUROPEAN PATENT APPLICATION

(11) **EP 4 035 923 A1**
(43) Date of publication of application: **03.08.2022**
(21) Application number: 22151858.2
(22) Date of filing: 17.01.2022
(51) Int. Cl.: B60L 3/12, B60L 7/26, B60K 6/442, B60L 50/16, B60W 20/00, B60L 7/14, B60W 30/18

(54) **BRAKING CONTROL SYSTEM OF ELECTRIC-POWERED VEHICLE**

(30) Priority: 29.01.2021 JP 2021013144
(71) Applicant: MAZDA MOTOR CORPORATION, Hiroshima 730-8670 (JP)
(72) Inventor: Hashizaka, Akira, Aki-gun, Hiroshima, 730-8670 (JP); Nagoshi, Masahiro, Aki-gun, Hiroshima, 730-8670 (JP); Wakayama, Norihira, Aki-gun, Hiroshima, 730-8670 (JP); Kaihara, Shinichi, Aki-gun, Hiroshima, 730-8670 (JP); Takada, Masakazu, Aki-gun, Hiroshima, 730-8670 (JP); Watanabe, Kentaro, Aki-gun, Hiroshima, 730-8670 (JP); Nakano, Yuji, Aki-gun, Hiroshima, 730-8670 (JP); Mochizuki, Hirotaka, Aki-gun, Hiroshima, 730-8670 (JP); Tsuda, Akira, Aki-gun, Hiroshima, 730-8670 (JP); Tsukamoto, Naoki, Aki-gun, Hiroshima, 730-8670 (JP)
(74) Representative: von Tietzen und Hennig, Nikolaus

(57) **Abstract**

A braking control system of a vehicle (10) including a friction braking apparatus (30), a regenerative braking apparatus (40), and an ECU (50) (control apparatus) that controls the braking apparatuses (30) and (40). The ECU (50) includes a target braking force calculation unit (52) that obtains a target braking force in accordance with the operation amount of a brake pedal (25) by a driver, a braking force determination unit (53) that determines a target friction braking force (first braking force) and a target regenerative braking force (second braking force) based on the target braking force, and a braking controller (51) that controls each of the braking apparatuses (30) and (40) such that each of the determined braking forces is generated in the vehicle (10). The braking force determination unit (53) determines the target friction braking force and the target regenerative braking force such that a sum of the target friction braking force and the target regenerative braking force becomes the target braking force and a pitch behavior specified by a preset pitch behavior model occurs in the vehicle (10).

## Description

### [Technical Field]

The present invention relates to a braking control system of an electric-powered vehicle such as an electric automobile and a hybrid car.

### [Background Art]

In an electric-powered vehicle such as an electric automobile and a hybrid car including an electric motor as a driving source for traveling, a regenerative braking apparatus that uses a load associated with the generation of regenerative electric power by the electric motor as a braking force (regenerative braking force) is included in addition to a friction braking apparatus. At the time of the braking of the vehicle, fuel consumption (electric power consumption) is improved by also using the regenerative braking force.

In the braking apparatuses as above, even when the same braking force (deceleration) is generated, impacts on the pitch attitude (pitch angle) of the vehicle are different from each other due to a difference in parts to which the braking force is input and suspension geometry. Therefore, the pitch attitude may unnaturally fluctuate due to a change in a ratio between a friction braking force and a regenerative braking force, and a feeling of strangeness may be given to a driver by the pitch behavior.

Regarding the point above, for example, in Patent Literature 1, a feature in which a target pitch gain of a vehicle is set so as to gradually change in accordance with a difference (the amount of shortage of the braking force) between a target braking force and a regenerative braking force at the time of braking of the vehicle, and a friction braking apparatus is controlled such that the target pitch gain is achieved is disclosed. According to the control as above, even when a relatively rapid change occurs in the ratio between the friction braking force and the regenerative braking force, the pitch behavior slowly changes, and hence a feeling of strangeness is hardly given to the driver.

### [Citation List]

### [Patent Literature]

[Patent Literature 1] Japanese Patent Laid-Open. No. 2019-64556

### [Summary of Invention]

### [Problems to be Solved by the Invention]

Meanwhile, from the viewpoint of achieving both of appropriate braking operation and improvement of a driving feeling, it is ideal that a more preferable pitch behavior that matches with the senses of the driver occurs while a necessary braking force (deceleration) is reliably generated in the braking control of the vehicle. However, the technology in the Patent Literature 1 described above merely makes it difficult for the driver to feel the change of the pitch behavior itself by slowly changing the pitch behavior of the vehicle, and it cannot necessarily be said that an ideal braking control as described above is realized.

The present invention has been made in view of the situation as described above, and an object thereof is to provide a technology that can cause a more preferable pitch behavior that matches with the senses of a driver to occur while reliably generating a necessary braking force (deceleration) regarding a braking control system of an electric-powered vehicle.

### [Means for Solving the Problems]

A braking control system of an electric-powered vehicle according to one aspect of the present invention is a braking control system including: a first braking apparatus with which a predetermined pitch behavior occurs in a vehicle at time of braking; a second braking apparatus with which a pitch behavior different from the pitch behavior occurs in the vehicle at time of braking; and a control apparatus that controls the first braking apparatus and the second braking apparatus. In the braking control system, the control apparatus includes: a target braking force calculation unit that obtains a target braking force in accordance with an operation amount of a braking operation by a driver; a braking force determination unit that determines a first braking force that is a braking force by the first braking apparatus and a second braking force that is a braking force by the second braking apparatus based on the target braking force; and a braking controller that controls the first braking apparatus and the second braking apparatus such that the first braking force and the second braking force determined by the braking force determination unit are generated in the vehicle, and the braking force determination unit determines the first braking force and the second braking force such that a sum of the first braking force and the second braking force becomes the target braking force and a pitch behavior specified by a preset pitch behavior model occurs in the vehicle.

According to a preferred aspect of the invention the operation amount of a braking operation by a driver comprises the operation of the brake pedal by the driver which is preferably provided to the target braking force calculation unit in the form of an output signal from a pedal stroke sensor (26).

In the braking control system, the first braking force and the second braking force are determined such that the sum of the first braking force and the second braking force becomes the target braking force. In this case, the first braking force and the second braking force are determined such that the pitch behavior specified by the predetermined pitch behavior model occurs in the vehicle. Therefore, the braking force (deceleration) necessary at the time of braking can be reliably applied to the vehicle and the more preferable pitch behavior that matches with the senses of the driver, in other words, the pitch behavior specified by the pitch behavior model can be caused to occur in the vehicle. As a result, both of the appropriate braking operation and the driving feeling can be achieved at a high level.

In this case, the braking force determination unit determines the first braking force and the second braking force such that a parameter value relating to the pitch behavior of the vehicle becomes a predetermined parameter value based on the pitch behavior model.

With this configuration, the first braking force and the second braking force can be suitably determined by using the parameter value as an index.

It can be said that the braking control system as above is useful when the first braking apparatus is a friction braking apparatus that applies a friction braking force to the vehicle and the second braking apparatus is a regenerative braking apparatus that applies a regenerative braking force to the vehicle, for example. In particular, a regenerative braking force for the vehicle is achieved by the electric-powered motor working as an electric generator, wherein the amount of the regenerative braking force depends on the amount of electric power generated by the motor.

In other words, it is conceived that, when the friction braking force and the regenerative braking force are used together at the time of braking, an unnatural pitch behavior occurs at the time of braking of the vehicle due to the ratio thereof and the fluctuation of the ratio because the pitch behavior in accordance with the friction braking force and the pitch behavior in accordance with the regenerative braking force are generally different from each other. However, according to the braking control system described above, the first braking force and the second braking force are determined such that the pitch behavior specified by the pitch behavior model occurs in the vehicle. Therefore, a case where an unnatural pitch behavior occurs in the vehicle or a case where the pitch behavior of the vehicle unnaturally changes can be suppressed at the time of braking, and a more preferable pitch behavior that matches with the senses of the driver can be caused to occur.

In this case, it is preferred that the braking force determination unit determine the second braking force first and determine a difference between the target braking force and the second braking force as the first braking force such that the pitch behavior specified by the pitch behavior model is obtained. In other words, it is preferred that the regenerative braking force be determined first and the difference between the target braking force and the regenerative braking force be set as the friction braking force.

In a general electric-powered vehicle such as an automobile, the regenerative braking force (second braking force) has a larger impact on the pitch behavior that occurs in the vehicle at the time of braking as compared to the friction braking force (first braking force). Therefore, the pitch behavior specified in the pitch behavior model can be efficiently and reliably caused to occur in the vehicle by preferentially determining the regenerative braking force (second braking force) as described above.

In the braking control system described above, when an amount of change of a pitch angle per unit time is a pitch rate, it is preferred that the pitch behavior model be set such that, after the pitch angle increases at a first pitch rate immediately after start of the braking operation by the driver, the pitch angle increases at a second pitch rate that is smaller than the first pitch rate.

With this configuration, the pitch angle of the vehicle rises greatly immediately after the start of the braking operation, and the change of the pitch angle is suppressed thereafter. Therefore, the driver can be caused to feel a relatively strong deceleration feeling immediately after the start of the braking operation, and the driver can be caused to feel that the vehicle is stably decelerating thereafter. As a result, a preferable pitch behavior that matches with the senses of the driver can be caused to occur in the vehicle.

In this case, it is preferred that the pitch behavior model be set such that the pitch angle increases at a third pitch rate that is even smaller than the second pitch rate after the pitch angle increases at the second pitch rate.

With this configuration, an opportunity for regenerative braking can be increased within the range of not giving a feeling of strangeness to the driver. Therefore, it is advantageous in terms of collecting regenerative electric power, and a contribution to the improvement of fuel consumption (electric power consumption) is made.

In the braking control system described above, it is preferred that the parameter value be the pitch angle or the pitch rate, but the pitch rate is an amount of change of the pitch angle per unit time, and hence control that matches with the senses of the driver even more can be performed when the pitch rate is applied as the parameter value.

According to a preferred aspect of the braking control system the target braking force obtained by the target braking force calculation unit is a braking force which is required to achieve a target deceleration, in particular a target deceleration rate. The target deceleration corresponds to a request by the driver operating the brake pedal of the vehicle. In other words, the braking force calculated by the target braking force calculation unit is based on the amount of depression of the brake pedal.

The braking control system may further comprise storage unit for storing pitch rate information. Said pitch rate information defines the relationship between the target deceleration and a pitch rate corresponding thereto.

According to a further preferred aspect of the braking control system the preset pitch behavior model is stored in the storage unit as a relationship between temporal changes of the brake pedal operation amount and temporal changes of a pitch angle and a pitch rate. In particular, the pitch behavior model stores a respective pitch angle and/or pitch rate related to a brake pedal operation amount and/or the target deceleration during different time ranges during operation of the brake pedal.

It is further advantageous when the braking force determining unit determines the first and second braking forces to be the pitch angle and pitch rate output by the pitch behavior model based on the operation of the brake pedal.

According to an advantegous aspect of the invention the braking control system is applied to a front wheel-drive electric vehicle, i.e. for providing a braking effect on the front wheels of the vehicle.

The invention is also directe to an electric-powered vehicle, in particular a front-wheel-driven electric vehicle, a four-wheel-driven electric vehicle or a hybrid vehicle, comprising at least one braking control system according to the invention.

### [Advantageous Effects of Invention]

With the braking control apparatus of the electric-powered vehicle according to each aspect described above, the more preferable pitch behavior that matches with the senses of the driver can be caused to occur in the vehicle while reliably generating the necessary braking force (deceleration).

### [Brief Description of Drawings]

FIG. 1 is a configuration diagram illustrating a braking control system of an electric-powered vehicle according to the present invention.
FIG. 2 is an explanatory diagram of a pitch behavior model in which FIG. 2(a) is a diagram showing a time change of the pedal operation amount, FIG. 2(b) is a diagram showing one specific example (a time change of the pitch angle) of the pitch behavior model, and FIG. 2(c) is a diagram showing a time change of the pitch rate.
FIG. 3 is a flowchart illustrating one example of braking control of the vehicle in the braking control system.
FIG. 4 is a flowchart (a subroutine of Step S7) illustrating processing for determining a target regenerative braking force.
FIG. 5 is an operation explanatory diagram of the braking control in which FIG. 5(a) is a diagram showing a time change of the deceleration and the braking amount (the friction braking amount and the regenerative braking amount) and FIG. 5(b) is a diagram showing a time change of the jerk.

### [Mode for Carrying Out the Invention]

An embodiment of the present invention is described in detail below with reference to the drawings.

### [Configuration of Braking Control System]

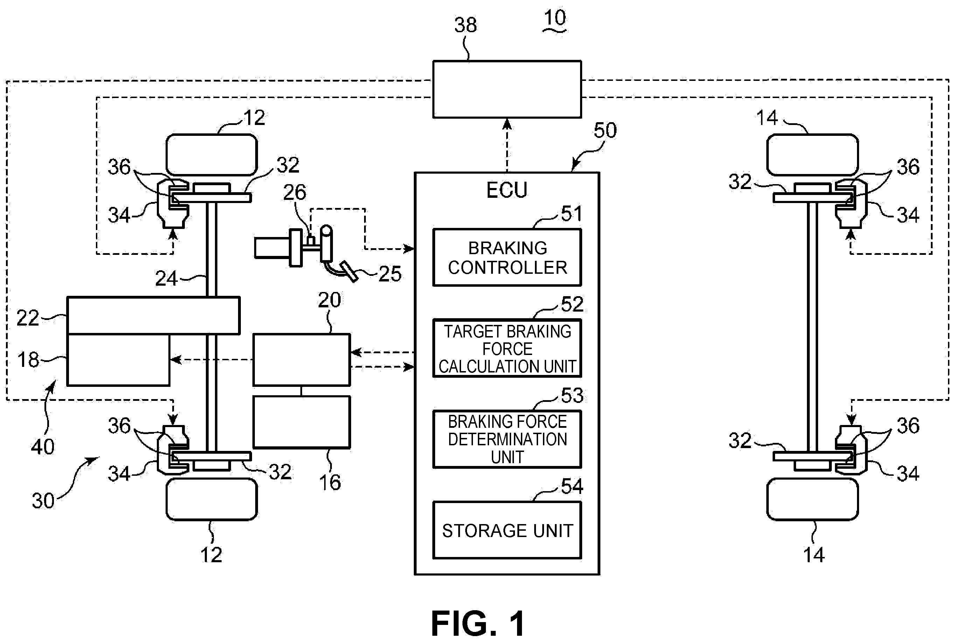

FIG. 1 is a configuration diagram illustrating a braking control system of an electric-powered vehicle according to one embodiment of the present invention. A vehicle 10 to which the braking control system is applied is an electric automobile that travels by electric power accumulated in a battery 16. Specifically, the vehicle 10 includes front wheels 12 and rear wheels 14, an electric-powered motor 18 for traveling, and an inverter 20 that controls the electric-powered motor 18, and travels by driving the front wheels 12 via a transaxle 22 and a driveshaft 24 by the electric-powered motor 18. In other words, the vehicle 10 is a front-wheel-drive electric automobile.

The electric-powered motor 18 is a so-called motor generator having a function of generating a torque for traveling and a function of generating electric power at the time of vehicle deceleration. Electric power generated by the electric-powered motor 18 at the time of vehicle deceleration is accumulated in the battery 16 via the inverter 20 and is used for the traveling and the like of the vehicle 10 thereafter.

The vehicle 10 further includes a brake pedal 25, and a braking apparatus that brakes the vehicle 10 by the operation (depression) of the brake pedal 25. The braking apparatus includes a friction braking apparatus 30 (first braking apparatus) that performs mechanical braking by applying a friction braking force in accordance with a friction force to the front wheels 12 and the rear wheels 14, and a regenerative braking apparatus 40 (second braking apparatus) that performs electrical braking by applying a regenerative braking force in accordance with the electric power generation amount of the electric-powered motor 18 to the wheels 12.

In the vehicle 10, as described in detail below, in accordance with the operation of the brake pedal 25, the friction braking apparatus 30 and the regenerative braking apparatus 40 work together and generate a necessary braking force (target braking force). Therefore, the braking control system can be said to be a so-called regenerative coordination brake system.

The friction braking apparatus 30 is configured by a disc brake system in the present example. Specifically, the friction braking apparatus 30 includes disk rotors 32 attached to the front wheels 12 and the rear wheels 14, hydraulic calipers 34 provided so as to correspond to the disk rotors 32, and a brake actuator 38 that drives each of the calipers 34. When the calipers 34 are driven and brake pads 36 that are friction members thereof are pressed against the disk rotors 32, a braking force is applied to the front wheels 12 and the rear wheels 14.

The brake actuator 38 is an electric brake booster, for example. The brake actuator 38 controls the hydraulic pressure (hydraulic brake pressure) supplied to the calipers 34 in accordance with the input of a control signal from an ECU 50 described below. By controlling the hydraulic pressure supplied to the calipers 34 as above, the friction braking force determined by the ECU 50 is applied to the front wheels 12 and the rear wheels 14.

The regenerative braking apparatus 40 is configured by the electric-powered motor 18, the inverter 20, the battery 16, and the like described above. In other words, at the time of deceleration, the electric-powered motor 18 is driven by the front wheels 12 via the driveshaft 24 and the transaxle 22, and hence the electric-powered motor 18 functions as an electric generator and generates electric power. The braking force in accordance with the electric power generation amount is applied to the front wheels 12. In this case, the inverter 20 is controlled in accordance with a control signal from the ECU 50, and hence a regenerative braking force determined by the ECU 50 is applied to the front wheels 12.

In the vehicle 10, the ECU 50 that performs overall control of the vehicle 10 is further included. The ECU 50 is a control apparatus based on a well-known microcomputer, and is configured by including a central processing unit (CPU), a storage apparatus (ROM, RAM), an input-output apparatus, a timer, and the like. The ECU 50 includes, as a functional configuration relating to the braking control of the vehicle 10, a braking controller 51, a target braking force calculation unit 52, a braking force determination unit 53, and a storage unit 54.

The braking controller 51 has a function of performing overall control of the braking operation of the vehicle 10 by the friction braking apparatus 30 and the regenerative braking apparatus 40.

The target braking force calculation unit 52 has a function of obtaining the deceleration (target deceleration) of the vehicle requested by the driver based on the operation of the brake pedal 25, and further obtaining the braking force (target braking force) for achieving the target deceleration. Specifically, when the driver operates the brake pedal 25, a signal indicating the operation amount (depression amount) is output from a pedal stroke sensor 26. The target braking force calculation unit 52 obtains the target deceleration based on an output signal from the pedal stroke sensor 26.

The braking force determination unit 53 has a function of distributing the target braking force obtained by the target braking force calculation unit 52 to the friction braking apparatus 30 and the regenerative braking apparatus 40. In other words, the target braking force calculation unit 52 determines the braking force (target friction braking force) in accordance with the friction braking apparatus 30 and the braking force (target regenerative braking force) in accordance with the regenerative braking apparatus 40 for achieving the target braking force. In this case, the braking force determination unit 53 determines the target friction braking force and the target regenerative braking force such that the sum of the target friction braking force and the target regenerative braking force becomes the target braking force and a parameter value relating to the pitch behavior of the vehicle 10, specifically, the pitch rate satisfies a pitch rate based on a predetermined pitch behavior model described below. The braking controller 51 controls the friction braking apparatus 30 and the regenerative braking apparatus 40 via the brake actuator 38 and the inverter 20 such that the target friction braking force and the target regenerative braking force determined by the braking force determination unit 53 are applied to the vehicle 10.

The storage unit 54 has a function of storing pitch rate information that is information on the pitch rate based on the pitch behavior model therein. The pitch rate information is information that defines the relationship between the target deceleration and the pitch rate corresponding thereto, and the braking force determination unit 53 determines the target regenerative braking force based on the pitch rate information.

### [Pitch Behavior Model]

In the vehicle 10 as described above, the impact on the pitch behavior of the vehicle 10 differs for a case where only the braking (friction braking) of the friction braking apparatus 30 is applied and a case where only the braking (regenerative braking) of the regenerative braking apparatus 40 is applied. Specifically, there has been obtained a knowledge that, for the case of only the regenerative braking, the impact on the pitch behavior is larger than the case of only the friction braking, and a pitch behavior in which the vehicle front side sinks tends to be strongly applied to the vehicle 10.

In the present example, by focusing on the feature, a model of a pitch behavior, in other words, a pitch behavior model that is more preferrable in which the pitch behavior of the vehicle 10 matches with the senses of the driver is set, and the braking force determination unit 53 determines the target friction braking force and the target regenerative braking force such that a pitch behavior specified by the pitch behavior model occurs in the vehicle 10.

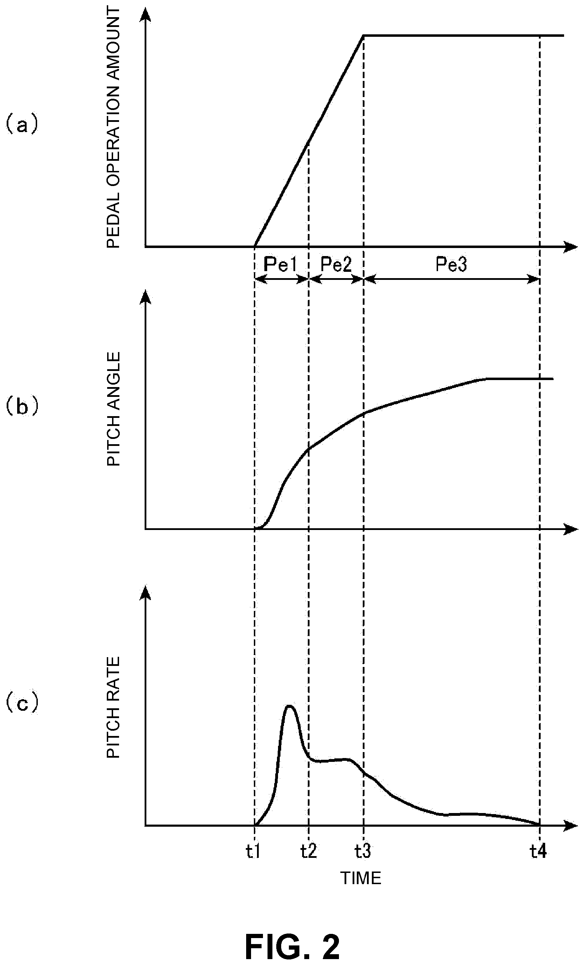

FIG. 2 is an explanatory diagram of a pitch behavior model in which FIG. 2(a) shows a time change of the pedal operation amount (the depression amount of the brake pedal 25), FIG. 2(b) shows one specific example (a time change of the pitch angle) of the pitch behavior model, and FIG. 2(c) shows a time change of the pitch rate. In the present example, the pitch rate is the amount of change of the pitch angle of the vehicle 10 per unit time.

In FIG. 2(a) to FIG. 2(c), t1 is a time point of the start of the pedal operation (the start of the depression of the brake pedal 25), and t2 is a certain time point in the middle of the pedal operation (in the middle of the depression of the brake pedal 25). In addition, t3 is a pedal operation ending time point (when the depression of the brake pedal 25 ends), and t4 is a time point at which a certain amount of time has elapsed from the pedal operation ending time point.

In the pitch behavior model, first to third time domains Pe1 to Pe3 are set for a period of time from the time point t1 to the time point t4, in other words, for the operation state of the brake pedal 25. Specifically, t1 to t2 represent the first domain Pe1, t2 to t3 represent the second domain Pe2, t3 to t4 represent the third domain Pe3, and the pitch behavior is specified as below for each of the time domains Pe1 to Pe3 such that a natural pitch behavior in which the vehicle front side sinks may occur from t1 to t4 due to the operation of the brake pedal 25.

The first domain Pe1 is a time domain immediately after the start of the pedal operation and is a domain in which the driver becomes aware that the vehicle 10 has entered a deceleration state. Therefore, the first domain Pe1 can be said to be a strong feeling domain in which it is desired that the driver be caused to strongly feel the deceleration of the vehicle 10. In the first domain Pe1, the pitch rate is set such that the pitch attitude (pitch angle) changes relatively largely in a short amount of time from the time point t1. In the first domain Pe1, by causing the pitch behavior as above to occur in the vehicle 10, the driver can be caused to strongly feel that the vehicle 10 has entered a deceleration state.

The second domain Pe2 is a time domain from approximately the middle period to the latter period in the middle of the pedal operation and is a domain in which the driver becomes aware that the vehicle 10 is smoothly decelerating. In the second domain Pe2, there is no need to cause the driver to feel the deceleration of the vehicle 10 in a manner that is as active as that in the first domain Pe1, and hence it can be said that the second domain Pe2 is an intermediate feeling domain. In the second domain Pe2, the pitch rate is set such that the pitch angle increases at a pitch rate that is lower than the pitch rate of the first domain Pe1. As a result, the driver can be caused to feel that the vehicle 10 is stably decelerating.

The third domain Pe3 is a domain in which the vehicle 10 has sufficiently decelerated and is a domain in which the driver recognizes that the vehicle 10 is close to an intended speed. In the third domain Pe3, there is no need to actively cause the driver to feel the deceleration of the vehicle 10, and hence it can be said that the third domain Pe3 is a weak feeling domain in which a large change in the pitch attitude is desired to be avoided. In the third domain Pe3, the pitch rate is set such that the pitch angle gradually increases at a pitch rate that is sufficiently lower than the pitch rate of the second domain Pe2.

In view of the reason described above, the pitch angle does not necessarily need to be increased in the third domain Pe3, and the pitch rate may be 0. However, in the present example, the regenerative electric power is actively collected by gradually increasing the pitch angle in the third domain Pe3. Therefore, the pitch rate in the third domain Pe3 is set to a level at which the driver hardly feels the change of the pitch attitude.

The ECU 50 controls the braking force of the vehicle 10 such that the pitch behavior specified in the pitch behavior model as described above occurs in the vehicle 10. As a result, from t1 to t4, the driver can be caused to feel a natural pitch behavior in which the vehicle front side sinks.

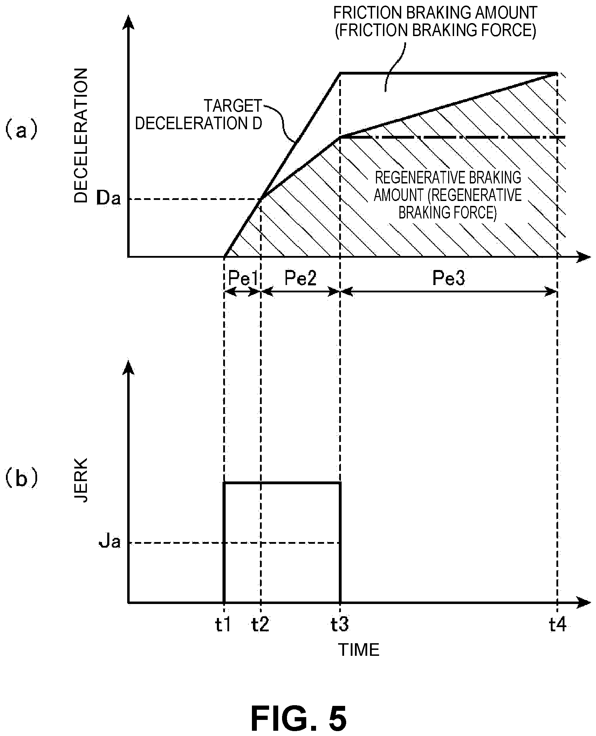

The pitch behavior model shown in FIG. 2(b) is a basic model, and the specific pitch angle and the time change (pitch rate) thereof differ depending on the pedal operation amount, in other words, the target deceleration. Pitch rate information that specifies the relationship between the target deceleration and the pitch rate is stored in the storage unit 54 for each of the domains Pe1 to Pe3 described above, and the regenerative braking force and the friction braking force are determined based on the target deceleration and the corresponding pitch rate information for each of the domains Pe1 to Pe3 at the time of the actual braking of the vehicle 10 (see FIG. 5(a)). As a result, the pitch behavior specified in the pitch behavior model (basic model) can be caused to occur in the vehicle 10. A specific braking control of the vehicle 10 is described below.

### [Braking Control of Vehicle 10 in Braking Control System]

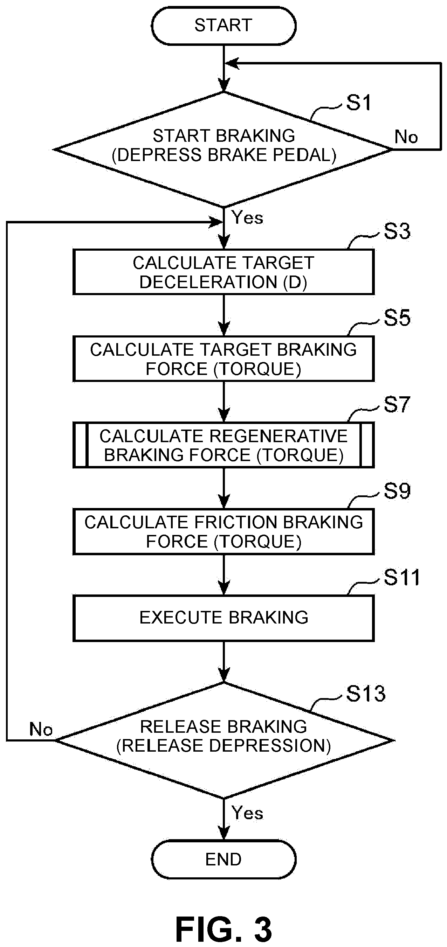

FIG. 3 is a flowchart illustrating one example of the braking control of the vehicle 10 by the ECU 50. FIG. 5 is an operation explanatory diagram of the braking control in which FIG. 5(a) shows a time change of the deceleration and the braking amount (the friction braking amount and the regenerative braking amount) and FIG. 5(b) shows a time change of the jerk. The term "jerk" herein means the amount of change (m/s³) of the target deceleration (m/s²) per unit time, in other words, a physical quantity indicating the state and the momentum by which the deceleration changes. Each of the time points t1 to t4 in FIG. 5 corresponds to each of the time points t1 to t4 in FIG. 2. Therefore, t1 to t2 correspond to the first domain Pe1, t2 to t4 correspond to the second domain Pe2, and t3 to t4 correspond to third domain Pe3.

When the control illustrated in FIG. 3 starts, the operation of the brake pedal 25 is waited for. When the brake pedal 25 is operated (Yes in Step S1), the target braking force calculation unit 52 calculates a target deceleration D based on an input signal from the pedal stroke sensor 26 (Step SS3). Specifically, the target deceleration D in accordance with the operation amount of the brake pedal 25 is calculated. The target braking force calculation unit 52 calculates a target braking force necessary to achieve the target deceleration D (Step S5).

When the target braking force is calculated, next, the braking force determination unit 53 calculates a friction braking force (target friction braking force) and a regenerative braking force (target regenerative braking force) necessary to achieve the target braking force. In this case, the braking force determination unit 53 calculates the regenerative braking force first.

As described above, in the regenerative braking, the impact on the pitch behavior is larger than in the friction braking, and a pitch behavior in which the vehicle front side sinks tends to be strongly applied to the vehicle 10. In the present example, with use of this point, the pitch behavior specified in the pitch behavior model may be efficiently reproduced by calculating and determining the regenerative braking force that causes the pitch behavior specified in the pitch behavior model to occur first.

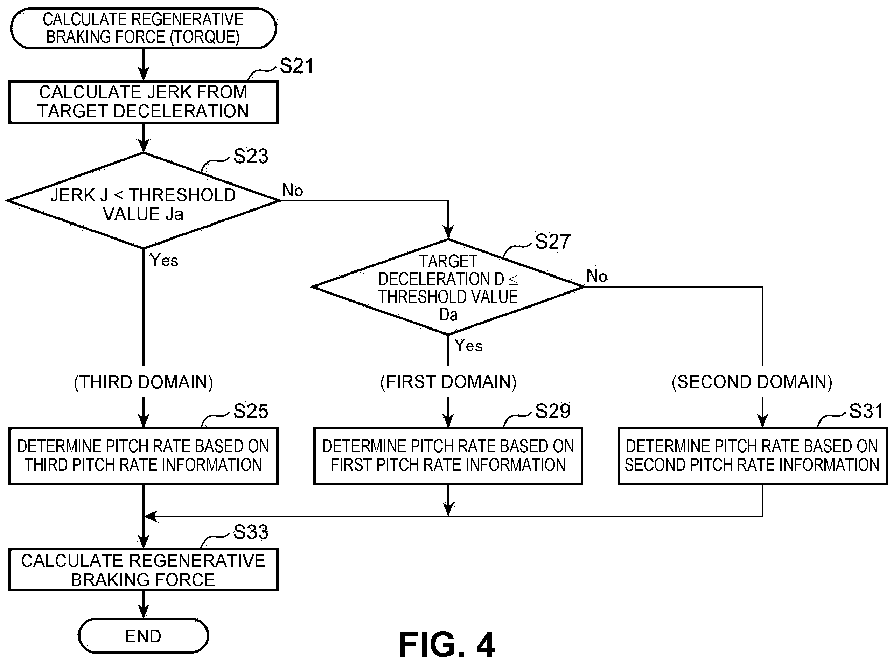

FIG. 4 is a flowchart (a subroutine of Step S7) illustrating processing for determining the target regenerative braking force. The braking force determination unit 53 calculates, based on the target deceleration D calculated in Step S3, a jerk J thereof (Step S21), and first determines the time domain out of the first domain Pe1 to the third domain Pe3 that the braking state of the vehicle 10, in other words, the operation state of the brake pedal 25 is in based on the jerk J and the target deceleration D.

Specifically, the braking force determination unit 53 compares the jerk J and a threshold value Ja thereof with each other (Step S23), and determines that the braking state is in the third domain Pe3 when J<Ja is satisfied (when it is Yes). The threshold value Ja is set to a value (positive number value) smaller than the value of the jerk J expected in the middle of the pedal operation (from the first domain Pe1 to the second domain Pe2) (see FIG. 5(b)).

When it is No in Step S23, the braking force determination unit 53 compares the target deceleration D and a threshold value Da thereof with each other (Step S27). Here, the braking force determination unit 53 determines that the braking state is in the first domain Pe1 when D≤Da is satisfied (when it is Yes), and determines that the proceeding state is in the second domain Pe2 when D>Da is satisfied. The threshold value Da is set to a value of the target deceleration at the time point t2 that is expected (see FIG. 5(a)).

When it is determined that the braking state is in the first domain Pe1 (Yes in Step S27), the braking force determination unit 53 refers to pitch rate information (first pitch rate information) corresponding to the first domain Pe1 that is stored in the storage unit 54, and determines a pitch rate corresponding to the target deceleration D based on the first pitch rate information. When it is determined that the braking state is in the second domain Pe2 (No in Step S27), the braking force determination unit 53 refers to pitch rate information (second pitch rate information) corresponding to the second domain Pe2, and determines a pitch rate corresponding to the target deceleration D based on the second pitch rate information. When it is determined that the braking state is in the third domain Pe3 (Yes in Step S23), the braking force determination unit 53 refers to pitch rate information (third pitch rate information) corresponding to the third domain Pe3, and determines a pitch rate corresponding to the target deceleration D based on the third pitch rate information.

Based on the pitch rates determined in Step S25, S29, and S31, the braking force determination unit 53 calculates a regenerative braking force that can cause the pitch behavior of the pitch rates to occur in the vehicle 10 (Step S33). When the braking force determination unit 53 determines that the braking state is in the first domain Pe1, the braking force determination unit 53 calculates a regenerative braking force such that the target deceleration D is achieved by only the regenerative braking, in other words, such that the target braking force is achieved by only the regenerative braking force as shown in FIG. 5(a).

Returning to FIG. 3, next, the braking force determination unit 53 subtracts the regenerative braking force calculated in Step S33 in FIG. 4 from the target braking force obtained in Step S5, to thereby calculate the remainder thereof as the friction braking force (Step S9). As a result, the friction braking force and the regenerative braking force necessary to achieve the target braking force are determined.

When the friction braking force and the regenerative braking force are determined, the braking controller 55 outputs a control signal to the brake actuator 38 and the inverter 20 such that each of the friction braking force calculated in Step S9 and the regenerative braking force calculated in Step S7 is applied to the vehicle 10. As a result, the braking operation of the vehicle 10 is executed (Step S11).

Next, the braking controller 51 determines whether a braking request is removed, in other words, whether the operation of the brake pedal 25 is released (Step S13), and returns the processing to Step S3 and repeats the processing of Steps S3 to S11 when it is No here. When it is finally determined that the operation of the brake pedal 25 is released (Yes in Step S13), the braking controller 51 ends the processing in accordance with the flowchart.

### [Effects and the like]

As described above, the braking control system of the embodiment includes the friction braking apparatus 30, the regenerative braking apparatus 40 with which a pitch behavior different from the above occurs in the vehicle, and the ECU 50 that controls the braking apparatuses 30 and 40. The ECU 50 includes the target braking force calculation unit 52 that obtains the target braking force by the operation amount of the braking operation by a driver, the braking force determination unit 53 that determines the friction braking force by the friction braking apparatus 30 and the regenerative braking force by the regenerative braking apparatus 40 based on the target braking force, and the braking controller 51 that controls the friction braking apparatus 30 and the regenerative braking apparatus 40 such that the determined friction braking force and regenerative braking force are generated in the vehicle 10. The braking force determination unit 53 determines the friction braking force and the regenerative braking force such that the pitch behavior specified by the pitch behavior model occurs in the vehicle 10. Specifically, as described above, the friction braking force and the regenerative braking force are determined such that the pitch rate of the pitch behavior becomes the pitch rates (pitch rates of the first to third pitch rate information) specified by the pitch behavior model.

According to the braking control system, the friction braking force and the regenerative braking force are determined such that the sum of the friction braking force and the regenerative braking force becomes the target braking force. In addition, the friction braking force and the regenerative braking force are determined such that the pitch rate specified by the pitch behavior model is satisfied, in other words, such that the pitch behavior specified by the pitch behavior model occurs in the vehicle 10. Therefore, the braking force (deceleration) necessary at the time of braking can be reliably applied to the vehicle 10 and the more preferable pitch behavior that matches with the senses of the driver, in other words, the pitch behavior specified by the pitch behavior model can be caused to occur in the vehicle 10. Therefore, both of the appropriate braking operation and the improvement of the driving feeling can be achieved at a high level.

In particular, in the braking control system, in view of the feature in which the regenerative braking force has a larger impact on the pitch behavior at the time of braking as compared to the friction braking force, the regenerative braking force is determined first, and the difference between the target braking force and the regenerative braking force becomes the friction braking force such that the pitch behavior specified by the pitch behavior model is obtained.

According to the configuration that preferentially determines the regenerative braking force as above, the pitch behavior specified in the pitch behavior model can be efficiently and reliably caused to occur in the vehicle 10 with use of the characteristic of the regenerative braking. In particular, in the first domain Pe1, the target deceleration D is achieved by only the regenerative braking, in other words, the target braking force is achieved by only the regenerative braking force (see FIG. 5(a)), and hence the pitch attitude can be effectively changed in a short amount of time immediately after the start of the pedal operation with use of the characteristic of the regenerative braking.

In the braking control system, the pitch behavior model is set in such a manner that a pitch rate (the pitch rate of the first domain Pe1) is set such that the pitch attitude (pitch angle) changes relatively largely in a short amount of time immediately after the start of the braking operation by the driver and the pitch angle increases at a pitch rate (the pitch rate of the second domain Pe2) that is smaller than the abovementioned pitch rate after the pitch angle increases at the abovementioned pitch rate.

As a result, the pitch angle of the vehicle rises greatly immediately after the start of the braking operation, and the change of the pitch angle is suppressed thereafter. Therefore, a preferable pitch behavior that matches with the senses of the driver can be achieved, in other words, the driver can be caused to feel a relatively strong deceleration feeling immediately after the start of the braking operation, and the driver can be caused to feel that the vehicle 10 is stably decelerating thereafter.

In the third domain Pe3 after the second domain Pe2, the pitch behavior model is set such that the pitch angle increases at a pitch rate that is sufficiently smaller than the pitch rate of the second domain Pe2, and hence an opportunity for collecting the regenerative electric power without giving a feeling of strangeness to the driver is secured. Therefore, according to the braking control system of the embodiment, there is also an advantage that contribution to the improvement of the fuel consumption (electric power consumption) of the vehicle 10 is further made while the effects described above are enjoyed.

### [Modification and the like]

The braking control system of the embodiment described above is one example of a preferable embodiment of the braking control system of the electric-powered vehicle according to the present invention, and the specific configuration thereof can be changed, as appropriate, without departing from the scope of the present invention. For example, a configuration as below can also be employed.

The pitch behavior model is not limited to the model of the embodiment as that shown in FIG. 2(b). An ideal pitch behavior at the time of deceleration of the vehicle is conceived to differ depending on the specific structure of the vehicle 10 and the like, and hence the pitch behavior model only needs to be set, as appropriate, such that an ideal pitch behavior that matches with the senses of the driver may be realized in accordance with the type of the vehicle 10. For example, in the embodiment, the pitch behavior model is set such that the pitch angle is gradually increased even when the braking state is in the third domain Pe3, to thereby actively collect the regenerative electric power (FIG. 5(a)). However, in the third domain Pe3, the pitch behavior model may be set such that the fluctuation of the pitch angle is suppressed. In this case, according to the described braking control by the ECU 50, the regenerative braking force (regenerative braking amount) of the third domain Pe3 becomes constant as indicated by a two-dot chain line in FIG. 5(a), for example.

In the embodiment, the ECU 50 (braking force determination unit 53) determines the pitch rate that is the amount of change of the pitch attitude (pitch angle) per unit time from the first to third pitch rate information stored in advance, and calculates the regenerative braking force such that the pitch behavior of the pitch rate occurs in the vehicle 10. In other words, the braking force determination unit 53 calculates the regenerative braking force such that the pitch rate of the pitch behavior of the vehicle 10 becomes predetermined pitch rates (pitch rates of the first to third pitch rate information) based on the pitch behavior model. However, the braking force determination unit 53 may calculate the regenerative braking force such that the pitch angle (pitch angle) of the vehicle 10 becomes a predetermined pitch angle based on the pitch behavior model, for example. In other words, as "the parameter value relating to the pitch behavior model" of the present invention, "the pitch angle" may be used instead of "the pitch rate". However, it is conceived that control that matches with the senses of the driver more becomes possible according to the control based on "the pitch rate" that is the amount of change of the pitch attitude (pitch angle) per unit time.

In the embodiment, the braking force determination unit 53 determines the regenerative braking force first with respect to the target braking force, and determines the difference between the target braking force and the regenerative braking force as the friction braking force. However, as long as the regenerative braking force and the friction braking force are determined such that the pitch behavior specified in the pitch behavior model is caused to occur in the vehicle 10, the process of determining the regenerative braking force and the friction braking force by the braking force determination unit 53 is not limited to the process of the embodiment and can be changed, as appropriate.

In the embodiment, a case where the braking control system of the present invention is applied to the front-wheel-drive electric automobile has been described, but the braking control system of the present invention can also be applied to an electric-powered vehicle other than the electric automobile such as a hybrid car including an engine for travel driving or a four-wheel-drive electric-powered vehicle that drives rear wheels in addition to front wheels.

### [Reference Signs List]

- 10: Vehicle
- 12: Front wheel
- 14: Rear wheel
- 16: Battery
- 18: Electric-powered motor
- 20: Inverter
- 22: Transaxle
- 24: Driveshaft
- 25: Brake pedal
- 26: Pedal stroke sensor
- 30: Friction braking apparatus
- 32: Disk rotor
- 34: Caliper
- 36: Brake pad
- 38: Brake actuator
- 40: Regenerative braking apparatus
- 50: ECU
- 51: Braking controller
- 52: Target braking force calculation unit
- 53: Braking force determination unit
- 54: Storage unit
- Pe1: First domain
- Pe2: Second domain
- Pe3: Third domain

## Claims

1. A braking control system of an electric-powered vehicle (10), the braking control system comprising: a first braking apparatus with which a predetermined pitch behavior occurs in a vehicle (10) at time of braking; a second braking apparatus with which a pitch behavior different from the pitch behavior occurs in the vehicle (10) at time of braking; and a control apparatus that controls the first braking apparatus and the second braking apparatus, the braking control system being **characterized in that**:
the control apparatus includes:
a target braking force calculation unit (52) that obtains a target braking force in accordance with an operation amount of a braking operation by a driver;
a braking force determination unit (53) that determines a first braking force that is a braking force by the first braking apparatus and a second braking force that is a braking force by the second braking apparatus based on the target braking force; and
a braking controller (51) that controls the first braking apparatus and the second braking apparatus such that the first braking force and the second braking force determined by the braking force determination unit (53) are generated in the vehicle (10); and
the braking force determination unit (53) determines the first braking force and the second braking force such that a sum of the first braking force and the second braking force becomes the target braking force and a pitch behavior specified by a preset pitch behavior model occurs in the vehicle (10).

2. The braking control system of the electric-powered vehicle (10) according to claim 1, **characterized in that**
the braking force determination unit (53) determines the first braking force and the second braking force such that a parameter value relating to the pitch behavior of the vehicle (10) becomes a predetermined parameter value based on the pitch behavior model.

3. The braking control system of the electric-powered vehicle according to claim 1 or 2, **characterized in that**
the first braking apparatus is a friction braking apparatus (30) that applies a friction braking force to the vehicle (10), and
the second braking apparatus is a regenerative braking apparatus (40) that applies a regenerative force to the vehicle (10), in particular in accordance with the electric power generation amount of an electric-powered motor (18) working as an electric generator.

4. The braking control system of the electric-powered vehicle (10) according to claim 3, **characterized in that**
the braking force determination unit (53) determines the second braking force first and determines a difference between the target braking force and the second braking force as the first braking force such that the pitch behavior specified by the pitch behavior model is obtained.

5. The braking control system of the electric-powered vehicle (10) according to claim 2, **characterized in that**
when an amount of change of a pitch angle per unit time is a pitch rate,
the pitch behavior model is set such that, after the pitch angle increases at a first pitch rate immediately after start of the braking operation by the driver, the pitch angle increases at a second pitch rate that is smaller than the first pitch rate.

6. The braking control system of the electric-powered vehicle (10) according to claim 5, **characterized in that**
the pitch behavior model is set such that the pitch angle increases at a third pitch rate that is even smaller than the second pitch rate after the pitch angle increases at the second pitch rate.

7. The braking control system of the electric-powered vehicle (10) according to claim 5 or 6, **characterized in that**
the parameter value is the pitch angle or the pitch rate.

8. The braking control system of an electric-powered vehicle (10) according to any of the preceding claims, wherein the target braking force obtained by the target braking force calculation unit (52) is a braking force required to achieve a target deceleration requested by the driver operating the brake pedal (25).

9. The braking control system of an electric-powered vehicle (10) according to claim 8, wherein the system comprises a storage unit (54) storing pitch rate information defining a relationship between the target deceleration rate and a pitch rate corresponding thereto.

10. The braking control system of an electric-powered vehicle (10) according to any of the preceding claims, wherein the preset pitch behavior model is stored in the storage unit (54) as a relationship between temporal changes of the brake pedal operation amount and temporal changes of a pitch angle and a pitch rate.

11. The braking control system of an electric-powered vehicle (10) according to any of the preceding claims, wherein the braking force determining unit determines the first and second braking forces to be the pitch angle and pitch rate output by the pitch behavior model based on the operation of the brake pedal.

12. The braking control system of an electric-powered vehicle (10) according to any of the preceding claims, wherein the operation amount of a braking operation by a driver comprises the operation of the brake pedal (25) by the driver which is preferably based on an output signal from a pedal stroke sensor (26).

13. The braking control system of an electric-powered vehicle (10) according to any of the preceding claims, wherein the braking control system is applied to a front wheel-drive electric vehicle.

14. An electric-powered vehicle, in particular a front-wheel-driven or four-wheel-driven electric vehicle or a hybrid vehicle, comprising at least one braking control system according to any of the preceding claims.
